(19) Europäisches Patentamt
European Patent Office
Office européen des brevets

(11) EP 3 553 860 A1

(12) EUROPEAN PATENT APPLICATION
published in accordance with Art. 153(4) EPC

(43) Date of publication:
16.10.2019 Bulletin 2019/42

(51) Int Cl.:
H01M 8/026 (2016.01)    H01M 8/10 (2016.01)
H01M 8/18 (2006.01)

(21) Application number: 17877872.6

(22) Date of filing: 06.12.2017

(86) International application number:
PCT/JP2017/043786

(87) International publication number:
WO 2018/105646 (14.06.2018 Gazette 2018/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 06.12.2016 JP 2016236721

(71) Applicant: Showa Denko K.K.
Tokyo 105-8518 (JP)

(72) Inventors:
• ICHIKAWA Masatoshi
Tokyo 105-8518 (JP)
• ISEKI Keizo
Tokyo 105-8518 (JP)
• HANAWA Kenzo
Tokyo 105-8518 (JP)

(74) Representative: Strehl Schübel-Hopf & Partner
Maximilianstrasse 54
80538 München (DE)

(54) **COLLECTOR PLATE AND REDOX FLOW BATTERY**

(57) This collector plate includes a plurality of flow paths through which an electrolyte flows and which are provided in at least one surface of the collector plate, in which an arithmetic surface roughness (Ra) of a first surface, which is an exposed surface of a wall portion between the plurality of flow paths on the side of one surface, is greater than or equal to 1 $\mu$m and less than or equal to 300 $\mu$m.

FIG. 4

EP 3 553 860 A1

**Description**

Technical Field

The present invention relates to a collector plate and a redox flow battery.
The present application claims priority on Japanese Patent Application No. 2016-236721 filed on December 6, 2016, the content of which is incorporated herein by reference.

BACKGROUND ART

A redox flow battery is known as a high-capacity storage battery. Typically, the redox flow battery includes an ion-exchange membrane that separates an electrolyte, and electrodes that are provided on both sides of the ion-exchange membrane. An oxidation reaction and a reduction reaction simultaneously progress on the electrodes, and thus, the redox flow battery is charged and discharged.

In the redox flow battery, the electrode is stored in an electrode compartment. The redox flow battery operates while the electrolyte is supplied to the electrode compartment and the electrolyte is circulated. Ions in the electrolyte give electrons to the electrodes, and the electrons are transferred to the outside of the redox flow battery. At this time, protons are transferred via the ion-exchange membrane. The redox flow battery is charged and discharged in such manner.

In order to increase the overall energy efficiency, the redox flow battery demands a decrease in internal resistance (cell resistance) and a decrease in pressure loss when the electrolyte permeates through the electrode. As one method (solution) for realizing the demand, a predetermined flow path is provided in the collector plate, and a flow of the electrolyte is controlled (for example, Patent Documents 1 and 2).

As described in Patent Documents 1 and 2, in the case where the predetermined flow path is provided in the collector plate, electrons occurring in the electrolyte are transferred via a wall portion forming the flow path of the collector plate. For this reason, a state of contact between the wall portion and the electrode affects the cell resistance of the redox flow battery.

PRIOR ART DOCUMENTS

Patent Documents

Patent Document 1: Japanese Unexamined Patent Application, First Publication No. 2015-122231
Patent Document 2: Published Japanese Translation No. 2015-505147 of the PCT International Publication

DISCLOSURE OF THE INVENTION

Problems to be Solved by the Invention

The present invention has been made in light of the problem, and an object of the present invention is to obtain a redox flow battery that has a low cell resistance by increasing a contact area between an electrode and a collector plate on a wall portion.

Solutions for Solving the Problems

The inventors of the present invention have found that a state of an upper surface of a wall portion of the collector plate is controlled; and thereby, a state of contact between an electrode and a collector plate becomes favorable, and the cell resistance of a redox flow battery can be decreased.

That is, the present invention provides a collector plate and a redox flow battery hereinbelow to solve the problem.

(1) According to one aspect of the present invention, there is provided a collector plate including a plurality of flow paths through which an electrolyte flows and which are provided in at least one surface of the collector plate, in which an arithmetic surface roughness (Ra) of a first surface, which is an exposed surface of a wall portion between the plurality of flow paths on the side of one surface, is greater than or equal to 1 $\mu$m and less than or equal to 300 $\mu$m.
(2) In the collector plate of the aspect, a width of the wall portion may be greater than or equal to 0.5 mm and less than or equal to 30 mm.

(3) The collector plate of the aspect may further include a peripheral edge wall that surrounds a predetermined region containing the flow paths, in which protrusions and recessions may be provided in a first surface which is an exposed surface of the peripheral edge wall on the side of one surface, and the protrusions and recessions may be formed in a direction intersecting an extension direction of the peripheral edge wall.

(4) The collector plate of the aspect may further include a peripheral edge wall that surrounds a predetermined region containing the flow paths, in which a surface roughness (Ra) of a first surface which is an exposed surface of the peripheral edge wall on the side of one surface, which is measured along a direction perpendicular to an extension direction of the peripheral edge wall, may be greater than a surface roughness (Ra) of the first surface which is measured along the extension direction of the peripheral edge wall.

(5) According to another aspect of the present invention, there is provided a redox flow battery including an ion-exchange membrane; the collector plate of the aspect; and electrodes disposed between the ion-exchange membrane and the current collector, in which the collector plate is disposed in such a manner that the first surface faces the electrode.

(6) In the redox flow battery of the other aspect, the electrode may contain carbon fibers, and an arithmetic surface roughness (Ra) of the first surface, which is an exposed surface of the wall portion on the side of one surface, may be greater than or equal to 1.0 time a fiber diameter of the carbon fibers, and less than or equal to 100 times the fiber diameter.

Effects of the Invention

In the redox flow battery of one aspect of the present invention, the contact area between the electrode and the collector plate is considered to be large, and thus a low cell resistance can be obtained.

BRIEF DESCRIPTION OF THE DRAWINGS

FIG. 1 is a schematic cross-sectional view of a redox flow battery of a first embodiment.
FIG. 2 is a plan view of a collector plate stored in a cell frame of the redox flow battery of the first embodiment as seen in a stacking direction.
FIG. 3 is a schematic cross-sectional view of the collector plate as the redox flow battery of the first embodiment is cut along an A-A plane in FIG. 2.
FIG. 4 is a schematic perspective magnified view of main elements of the collector plate of the redox flow battery of the first embodiment.
FIG. 5 is a schematic cross-sectional view as the redox flow battery of the first embodiment is cut along the A-A plane in FIG. 2.
FIG. 6 is a view showing a flow of an electrolyte in the redox flow battery of the first embodiment.

EMBODIMENTS FOR CARRYING OUT THE INVENTION

A redox flow battery will be described hereinbelow in detail with proper reference to the drawings. In the drawings referenced in the description hereinbelow, characteristic parts may be magnified for an illustrative purpose for easy understanding of characteristics of the present invention, and a dimension ratio of each configuration element may differ from an actual value. Materials and dimensions provided in the description hereinbelow are simply exemplary examples, and the present invention is not limited thereto. Modifications can be appropriately made without departing from requirements (features) of the present invention.

(First Embodiment)

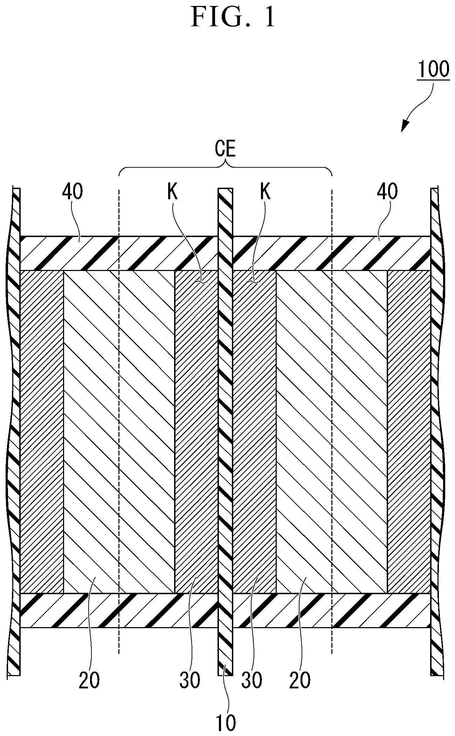

FIG. 1 is a schematic cross-sectional view of a redox flow battery of a first embodiment.

A redox flow battery 100 shown in FIG. 1 includes: an ion-exchange membrane 10; collector plates 20; and electrodes 30. The collector plates 20 and the electrodes 30 are surrounded by a cell frame 40. The electrode 30 is provided in an electrode compartment K formed by the ion-exchange membrane 10, the collector plate 20, and the cell frame 40. An electrolyte supplied to the electrode compartment K is prevented from leaking to the outside by the cell frame 40.

The redox flow battery 100 shown in FIG. 1 has a cell-stack structure where a plurality of cells CE are stacked on top of each other. The number of stacks of the cells CE can be appropriately changed depending on applications, and only a single cell may be provided. In the case where the plurality of cells CE are connected together in series, a practical voltage is obtained. One cell CE includes the ion-exchange membrane 10; two electrodes 30 servings as a positive electrode and a negative electrode between which the ion-exchange membrane 10 is interposed; and the collector plates 20 between which the two electrodes 30 are interposed.

Hereinbelow, a stacking direction of the cell-stack structure where the cells CE are stacked on top of each other may be simply referred to as a "stacking direction", and the direction of a plane vertical to the stacking direction of the cell-stack structure may be simply referred to as an "in-plane direction".

"Ion-exchange Membrane"

A cation-exchange membrane can be preferably used as the ion-exchange membrane 10. Specifically, examples of the material of the ion-exchange membrane 10 include a perfluorocarbon polymer having a sulfo group, a hydrocarbon-based polymer compound having a sulfo group, a polymer compound doped with an inorganic acid such as phosphoric acid, an organic/inorganic hybrid polymer in which a part thereof is substituted with a proton-conductive functional group, and a proton conductor in which a polymer matrix is impregnated with a phosphoric acid solution or a sulfuric acid solution. Among the materials, a perfluorocarbon polymer having a sulfo group is preferably used, and a Nafion (registered trademark) is more preferably used.

"Collector plate"

The collector plate 20 is a current collector having the function of transferring electrons to or from the electrode 30. In the case where both surfaces of the collector plate 20 can be used as a current collector, the collector plate 20 may be referred to as a bipolar plate. The collector plate of the embodiment is more preferably used in a redox flow battery.

The collector plate 20 can be made from a material having conductivity. A conductive material containing carbons can be used. Specifically, examples of the material include conductive resin consisting of graphite and an organic polymer compound, conductive resin in which a part of graphite is substituted with at least one of a carbon black and a diamond-like carbon, a mold material obtained by kneading carbon and resin. Among the materials, a mold material obtained by kneading carbon and resin and molding the kneaded product is preferably used.

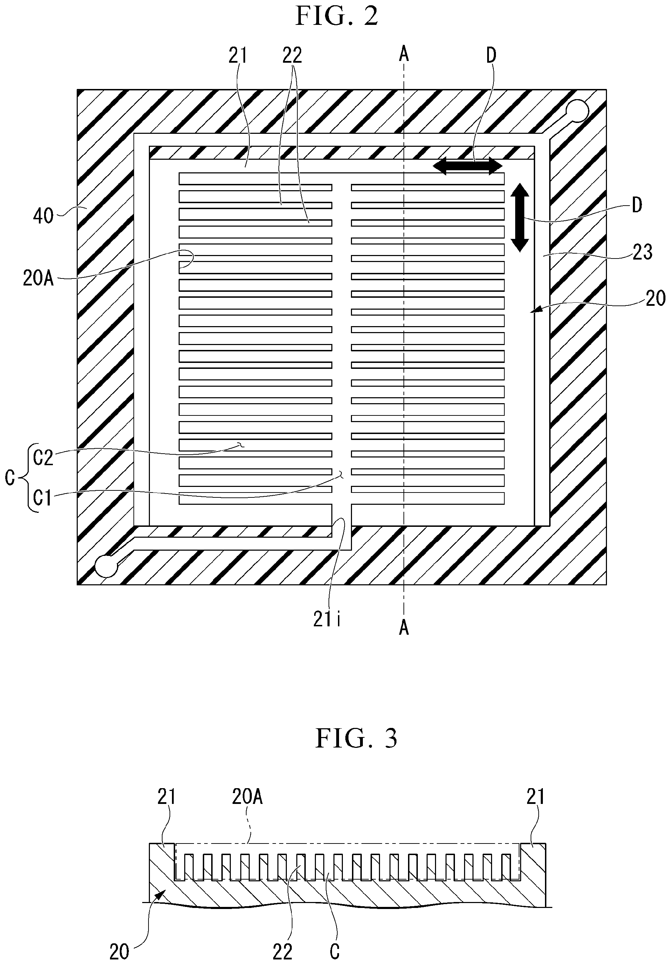

FIG. 2 is a plan view of the collector plate 20 stored in the cell frame 40 as seen in the stacking direction.

A plurality of flow paths C are provided on a surface of the collector plate 20 positioned on the side of the ion-exchange membrane 10 (the ion-exchange membrane 10 side surface). A wall portion (internal wall 22) is provided at a position between grooves of the plurality of flow paths C. It is also referred that a plurality of the internal walls 22 are provided, and the flow path C is formed between the internal walls 22. A recessed region (portion) 20A is formed on the surface of the collector plate 20 positioned on the side of the ion-exchange membrane 10 (the ion-exchange membrane 10 side surface). FIG. 3 is a schematic cross-sectional view of the collector plate as the redox flow battery of the first embodiment is cut along an A-A plane in FIG. 2. As shown in FIG. 3, the recessed region 20A includes the flow paths C and a region into which a first electrode 31 (will be described later) is fitted. A peripheral edge wall 21 may be provided on one surface of the collector plate 20, and the peripheral edge wall 21 defines the recessed region 20A. The peripheral edge wall 21 surrounds a predetermined region containing the flow path C. The region surrounded by the peripheral edge wall 21 contains the recessed region 20A, and has an arbitrarily selected shape such as square, substantially square, or rectangle. An electrolyte is supplied from an opening portion 21i of the peripheral edge wall 21 into the recessed region 20A surrounded by the peripheral edge wall 21.

It is preferable that the electrolyte supplied from the opening portion 21i of the peripheral edge wall 21 diffuses throughout the recessed region 20A, and then is exhausted from an exhaust path 23. Because the electrolyte diffuses throughout the recessed region 20A in the in-plane direction, the entire surface of the electrode 30 in the in-plane direction can be used. As a result, the cell resistance of the redox flow battery decreases, and charge and discharge characteristics are improved.

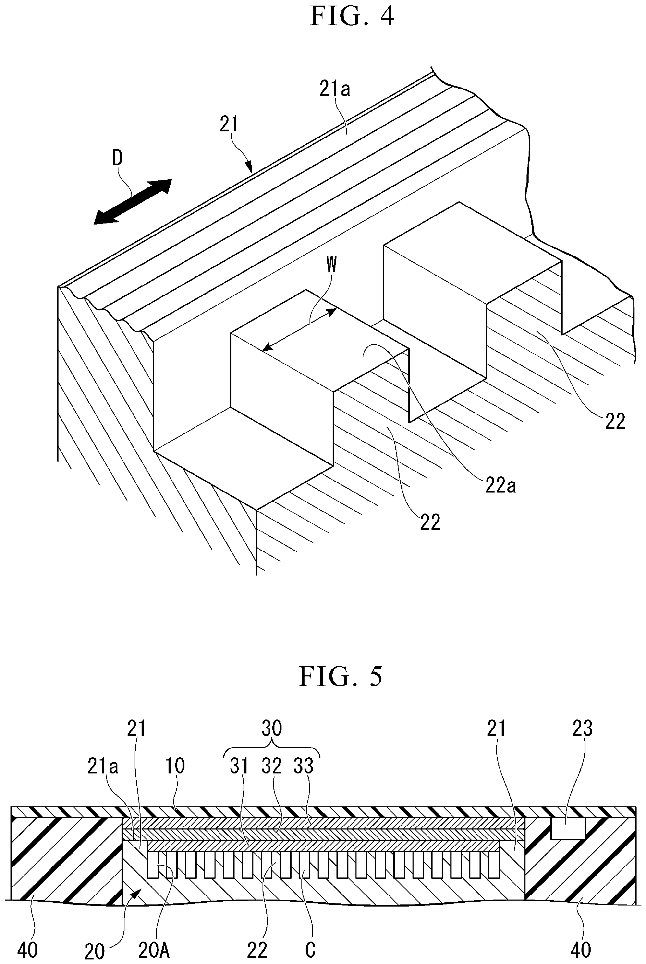

FIG. 4 is a perspective magnified view of main elements of the collector plate 20. As shown in FIG. 4, it is preferable that a first surface 21a of the peripheral edge wall 21 (exposed surface on the side (upper side in FIG. 4) of one surface where the flow path is formed) is provided with protrusions and recessions restricting a flow of the electrolyte. The first surface 21a of the peripheral edge wall 21 is also referred to as a surface that is positioned toward the stacking direction, and faces the electrode 30 or the ion-exchange membrane 10. The protrusions and recessions are formed in a direction intersecting an extension direction D of the peripheral edge wall 21. The directions of arrows in FIGS. 2 and 4 represent the extension direction D. The protrusions and recessions are, for example, streaky grooves as shown in FIG. 4.

In the case where the protrusions and recessions are cyclically formed in the first surface 21a of the peripheral edge wall 21 in the direction intersecting the extension direction D, it becomes difficult for the electrolyte to flow from the recessed region 20A to the exhaust path 23. That is, before reliably diffusing throughout the recessed region 20A, the electrolyte is restricted from passing over the first surface 21a of the peripheral edge wall 21, and flowing to the exhaust path 23. As a result, the electrolyte reliably diffuses throughout the recessed region 20A, and is supplied to the entire surface of the electrode 30 in the in-plane direction.

The first surface 21a of the peripheral edge wall 21 may not necessarily have a pattern of protrusions and recessions. The surface roughness (Ra) of the first surface 21a of the peripheral edge wall 21 which is measured along a direction perpendicular to the extension direction D of the peripheral edge wall 21 may be greater than the surface roughness (Ra) measured along the extension direction D of the peripheral edge wall 21. According to this configuration, the electrolyte can be restricted from flowing from the recessed region 20A to the exhaust path 23. Grooves may be formed in the first surface 21a of the peripheral edge wall 21 along the extension direction D of the peripheral edge wall 21.

The internal walls 22 form the flow paths C through which the electrolyte flows in the recessed region 20A. The shape of the flow path C and the shape of the internal wall 22 regulated by the plurality of flow paths C are not limited to a specific shape.

The internal walls 22 shown in FIG. 2 include a first flow path C1 that is a part of the flow path C extending from the opening portion 21i in one direction, and second flow paths C2 that are connected with the first flow path C1 and branch from the first flow path C1 in a direction intersecting the first flow path C1. The supplied electrolyte flows along the first flow path C1, and diffuses in the second flow paths C2. That is, the electrolyte easily diffuses in the recessed region 20A in the in-plane direction.

The configuration of the collector plate 20 is not limited to the configuration shown in FIG. 2, and the collector plate 20 can have various configurations.

FIG. 4 is a perspective magnified view of main elements of the collector plate 20. As shown in FIG. 4, a first surface 22a of an internal wall 22 (exposed surface on the side (upper side in FIG. 4) of one surface of the internal wall between a plurality of the flow paths) is a surface disposed on the side of the ion-exchange membrane 10. The first surface 22a of the internal wall 22 is also referred to as a surface that is positioned toward the stacking direction, and faces the electrode 30. In FIG. 4, the flow path C between the internal walls 22 is shown to have a rectangular cross-sectional shape. The flow path C may have a semicircular or triangular cross-sectional shape.

The first surface 22a of the internal wall 22 is in direct contact with the electrode 30. In the embodiment, the arithmetic surface roughness (Ra) of the first surface 22a of the internal wall 22 is greater than or equal to 1 μm and less than or equal to 300 μm. The arithmetic surface roughness (Ra) is preferably greater than or equal to 2 μm and less than or equal to 250 μm, and more preferably greater than or equal to 5 μm and less than or equal to 200 μm. The arithmetic surface roughness is measured based on JIS B0601. A measurement length is set to 2 mm, and is an average value of Ra measured at three arbitrary points. The arithmetic surface roughness is also referred to as a mean surface roughness or simply a surface roughness.

In the case where the first surface 22a of the internal wall 22 has a predetermined surface roughness, a contact area between the electrode 30 and the internal wall 22 is considered to become large. In the case where the contact area between the electrode 30 and the internal wall 22 is large, the transferring of electrons occurring in the electrolyte becomes smooth, and the cell resistance of the redox flow battery decreases.

The redox flow battery is assembled by stacking the collector plates 20, the electrodes 30, and the ion-exchange membrane 10 on top of each other which are separate members, and interposing the collector plates 20, the electrodes 30, and the ion-exchange membrane 10 between themselves in the stacking direction. For this reason, the position of the electrode 30 may shift relative to the position of the collector plate 20 in the in-plane direction. In the case where the position of the electrode 30 shifts relative to the position of the collector plate 20, the electrolyte flows out without passing through the electrode 30, and charge and discharge capacity of the redox flow battery decreases.

In the case where the first surface 22a of the internal wall 22 has a predetermined surface roughness, the positioning of the electrode 30 during the assembly of the redox flow battery becomes stable. That is, a decrease in the charge and discharge capacity of the redox flow battery is prevented.

The state of contact between the first surface 22a of the internal wall 22 and carbon fibers of the electrode 30 is also one of major factors for increasing a contact area between the collector plate 20 and the electrode 30.

For example, in the case where a fiber diameter of the carbon fibers of the electrode 30 is greatly large relative to the mean surface roughness (Ra) of the first surface 22a of the internal wall 22, the carbon fibers cannot enter the protrusions and recessions of the first surface 22a. In this case, the carbon fibers are in point contact with the protrusions and recessions of the first surface 22a.

It is preferable that the carbon fibers are in surface contact with the protrusions and recessions of the first surface 22a so as to increase the contact area between the electrode 30 and the collector plate 20. For this reason, the arithmetic surface roughness (Ra) of the first surface 22a of the internal wall 22 is preferably greater than or equal to 1.0 time and less than or equal to 100 times the fiber diameter of the carbon fibers (will be described later) of the electrode 30, and more preferably greater than or equal to 1.2 times and less than or equal to 50 times the fiber diameter. In the case where the first surface 22a of the internal wall 22 fulfills the above-described range, the contact area between the electrode 30 and the collector plate 20 can be further increased.

In the case where the fiber diameter of the carbon fibers of the electrode 30 is greatly large relative to the surface roughness (Ra) of the first surface 22a of the internal wall 22, the carbon fibers cannot enter the protrusions and recessions of the first surface 22a. In this case, the carbon fibers are in point contact with the protrusions and recessions of the first surface 22a. On the other hand, in the case where the surface roughness (Ra) of the first surface 22a of the internal wall 22 is set to be in the above-described range, the carbon fibers can enter the protrusions and recessions, and are in surface contact with the first surface 22a. As a result, the contact area between the electrode 30 and the collector plate 20 increases.

A width W of the internal wall 22 is preferably greater than or equal to 0.5 mm and less than or equal to 30 mm, and more preferably greater than or equal to 0.5 mm and less than or equal to 10 mm. The electrolyte is supplied along the flow path C. For this reason, when a part of the electrode 30 positioned (present) on the flow path C is compared to a part of the electrode 30 positioned on the internal wall 22, the electrolyte is easily supplied to the part of the electrode 30 positioned on the flow path C. In the case where the width W of the internal wall 22 is small, the electrolyte is easily supplied to the part of the electrode 30 on the internal wall 22.

Reactions of the redox flow battery occur at an interface between the electrolyte and the electrode 30. For this reason, in the case where the width of the internal wall 22 is sufficiently small, the electrolyte is sufficiently supplied in the in-plane direction, an increase in the cell resistance is prevented, and a decrease in the charge and discharge capacity of the redox flow battery is prevented.

The internal walls 22 form a flow path for a flow of the electrolyte. For this reason, it is possible to ensure sufficient strength by designing the internal wall 22 to have a certain level of thickness. As a result, there are advantages such as being easily processed.

"Electrode"

FIG. 5 is a schematic cross-sectional view as the redox flow battery of the first embodiment is cut along the A-A plane in FIG. 2.

A conductive sheet containing carbon fibers can be used as the electrode 30. The carbon fiber referred herein is fibrous carbon, and examples of the fibrous carbon include carbon fibers and carbon nanotubes. In the case where the electrode 30 contains carbon fibers, a contact area between the electrolyte and the electrode 30 increases, and the reactivity of the redox flow battery 100 increases.

Particularly, in the case where the electrode 30 contains carbon nanotubes having a diameter of less than or equal to 1 $\mu$m, a fiber diameter of the carbon nanotubes is small, and thus it is possible to increase the contact area between the electrolyte and the electrode 30. On the other hand, in the case where the electrode 30 contains carbon fibers having a diameter of greater than or equal to 1 $\mu$m, the conductive sheet becomes strong, and it becomes difficult to break the conductive sheet. For example, a carbon felt, a carbon paper, or a carbon-nanotube sheet can be used as the conductive sheet containing carbon fibers.

A layer of the electrode 30 may be provided in the stacking direction, or a plurality of layers of the electrodes 30 may be provided in the stacking direction. For example, as shown in FIG. 5, the electrode 30 may include the first electrode 31, the second electrode 32, and the liquid outlet layer 33 which are sequentially disposed from the side of the collector plate 20.

The first electrode 31 is fitted into the recessed region 20A of the collector plate 20, and is present closer to the collector plate 20 than a first surface 21a of the peripheral edge wall 21. In detail, the first electrode 31 is fitted into a region which is surrounded by a side surface of the peripheral edge wall 21 and the first surfaces 22a of the internal walls 22 in the recessed region 20A. The second electrode 32 is disposed closer to the ion-exchange membrane 10 than the first surface 21a of the peripheral edge wall 21, and stretches throughout a region surrounded by the cell frame 40. The liquid outlet layer 33 stretches throughout the region surrounded by the cell frame 40, and the liquid outlet layer 33 preferably allows the electrolyte to easily flow therethrough more easily than the second electrode 32. The liquid outlet layer 33 may be a porous sheet having a large number of holes for permeation of liquid, and may not necessarily have conductivity.

As described above, a relationship between the fiber diameter of the carbon fibers of the electrode 30 and the mean surface roughness (Ra) of the first surface 22a of the internal wall 22 is important for increasing the contact area between the collector plate 20 and the electrode 30. In the case where a plurality of the electrodes 30 are provided, a fiber diameter of carbon fibers contained in an electrode layer which is in contact with the internal wall 22, that is, a fiber diameter of carbon fibers contained in the first electrode 31 in FIG. 5 becomes important.

In the case where the electrode 30 (or the first electrode 31) in contact with the internal wall 22 contains a plurality of types of fibers, it is preferable that the mean surface roughness (Ra) of the first surface 22a of the internal wall 22 is determined relative to a large fiber diameter of carbon fibers which are contained in the electrode 30 (or the first electrode 31). The carbon fibers having a large fiber diameter are fibers that are determined to be thick at an observation of 1 cm square of the surface of the electrode 30 in contact with the collector plate 20 by using an optical microscope or a scanning electron microscope (SEM). The large fiber diameter of the carbon fibers is set to an average diameter of three thick fibers.

The first electrode 31 preferably has a liquid permeability greater than that of the second electrode 32. In the case where the liquid permeability of the first electrode 31 in the in-plane direction is greater than that of the second electrode 32 in the stacking direction, a flow of the electrolyte having flown into the electrode compartment K is restricted by the second electrode 32, and the electrolyte diffuses in the in-plane direction. In the case where the electrolyte diffuses throughout the recessed region 20A in the in-plane direction, the electrolyte flows to the entire surface of the second electrode 32 more uniformly and easily.

The liquid outlet layer 33 is porous, and the electrolyte having flown out from the second electrode 32 is guided to the exhaust path by the liquid outlet layer 33. For this reason, the liquid outlet layer 33 preferably has a liquid permeability greater than that of the second electrode 32. In the case where the liquid permeability of the liquid outlet layer 33 in the in-plane direction is greater than that of the second electrode 32 in the stacking direction, a difference in a flow of the electrolyte in a part of the second electrode 32 in the vicinity of the exhaust path 23 becomes small. As a result, charge and discharge reactions can occur on the entire surface of the second electrode 32, and the cell resistance decreases. In the case where the liquid outlet layer 33 is made from a conductive material, and serves as an electrode (third electrode) which is a part of the electrode 30, the cell resistance further decreases. The materials of the first electrode 31 can be used as exemplary examples of the conductive material.

The liquid permeability can be evaluated by a Darcy's law permeability (hereinbelow, may be simply referred to as a permeability). Typically, the Darcy's law is used to represent the permeability of a porous medium, and is also applied to members other than porous materials for the sake of convenience. In a non-uniform and anisotropic member, a permeability in a direction where the lowest permeability is observed is adopted.

A Darcy's law permeability k ($m^2$) is calculated based on a relationship with a permeation flux (m/sec) of a liquid which is represented by the following equation where when the liquid having a viscosity $\mu$ (Pa·sec) permeates through a member having a cross-sectional area S ($m^2$) and a length L (m) at a flow rate Q ($m^3$/sec), a pressure difference between a liquid inlet side and a liquid outlet side of the member is represented as $\Delta P$ (Pa).

$$\frac{Q}{S} = \frac{k}{\mu} \times \frac{\Delta P}{L} \qquad \cdots (1)$$

The permeability of the first electrode 31 is preferably greater than or equal to 100 times, more preferably greater than or equal to 300 times, and further more preferably greater than or equal to 1,000 times that of the second electrode 32. For a specific example where the above-described relationship can be realized, the first electrode 31 is made from a carbon felt or a carbon paper which contains carbon fibers having a fiber diameter of greater than or equal to 1 $\mu$m, and the second electrode 32 is made from a carbon-nanotube sheet which contains carbon nanotubes having a fiber diameter of less than or equal to 1 $\mu$m. The permeability of the first electrode 31 represents a permeability in the in-plane direction, and the permeability of the second electrode 32 represents a permeability in the stacking direction (normal direction of the in-plane direction).

The liquid outlet layer 33 preferably has a liquid permeability greater than that of the second electrode 32. The reason is that the electrolyte having passed through the second electrode 32 is required to be quickly exhausted to the exhaust path 23. The permeability of the liquid outlet layer 33 is preferably greater than or equal to 50 times, more preferably greater than or equal to 100 times, further more preferably greater than or equal to 300 times, and particularly preferably greater than or equal to 1,000 times that of the second electrode 32. For a specific example where the above-described relationship can be realized, the exemplary examples of the materials of the first electrode 31 can be used as the material of the liquid outlet layer 33. The permeability of the liquid outlet layer 33 represents a permeability in the in-plane direction.

"Operation of Redox Flow Battery"

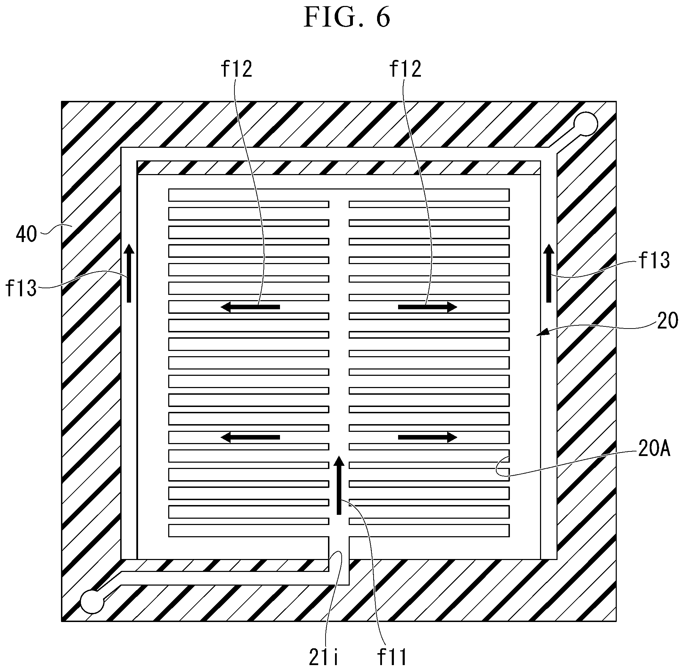

An example of an operation of the redox flow battery 100 will be described with reference to FIG. 6. FIG. 6 is a view showing a flow of the electrolyte in the redox flow battery 100 of the first embodiment.

The electrolyte is supplied into the electrode compartment K of the redox flow battery 100 from an inlet port provided in the cell frame 40. The electrolyte supplied into the electrode compartment K reacts with the electrode 30 in the electrode compartment K. Ions occurring at the reactions flow between the electrodes 30 via the ion-exchange membrane 10, and charge and discharge occurs. The electrolyte after the reactions is exhausted from an outlet port provided in the cell frame 40.

The electrolyte is supplied from the opening portion 21i of the peripheral edge wall 21 into the recessed region 20A in the electrode compartment K (flow fl 1). The supplied electrolyte flows along the internal walls 22, and diffuses in the recessed region 20A in the in-plane direction (flow f12). Then the electrolyte passes through the electrode 30, and is exhausted from the exhaust path 23 (flow f13).

As described above, in the redox flow battery of the embodiment, it is possible to increase the contact area between the electrode and the collector plate. In the case where the contact area between the electrode and the collector plate is large, the transferring of electrons occurring in the electrolyte becomes smooth, and it is possible to decrease the cell resistance of the redox flow battery.

In the embodiment, the accuracy of assembling the redox flow battery is improved. For this reason, a decrease in the charge and discharge capacity of the redox flow battery is prevented.

A preferred embodiment of the present invention has been described above in detail, and the present invention is not limited to a specific embodiment. Various modifications and changes can be made without departing from the features of the present invention described in the claims.

EXAMPLES

(Example 1)

"Preparation of Member"

A planar plate of 50 mm × 50 mm made from a resin complex containing carbons was prepared for the collector plate 20. The cross-sectional size of the electrode compartment K in the in-plane direction surrounded by the cell frame 40 was set to 50 mm × 50 mm.

As shown in FIG. 2, the collector plate 20 included the first flow path C1 and the second flow paths C2 which were defined by the internal walls 22. The width of the peripheral edge wall 21 was set to 1.5 mm, the width of the internal wall 22 was set to 1 mm, the width of the first flow path C1 was set to 1 mm, and the width of the second flow path C2 was set to 1 mm. The internal walls 22 and the second flow paths C2 were disposed to have line symmetry with respect to the first flow path C1, respectively. Twenty three internal walls 22 and twenty four second flow paths C2 were disposed on one surface side of the first flow path C1. The similar configuration was provided on the other surface side of the first flow path C1.

The arithmetic surface roughness of the first surface 22a of the internal wall 22 was set to 27 $\mu$m. The first surface 22a of the internal wall 22 was subjected to blasting by blowing ceramic particles thereonto. The blasting was performed in such a manner that the amount of ejected ceramic particles was changed, and a predetermined roughness was obtained. The blasting was performed before the first flow path C1 and the second flow paths C2 were formed.

Three layers of electrodes stacked on top of each other in the stacking direction was used as the electrode 30. A carbon fiber sheet A was used as the first electrode 31. A fiber diameter of carbon fibers of the electrode 30 was 8 $\mu$m. That is, the arithmetic surface roughness (Ra) of the first surface 22a of the internal wall 22 was 3.4 times the fiber diameter of the carbon fibers.

11 layers of the first electrodes of 50 mm × 50 mm were stacked and compressed in a stacking direction in a permeability measurement cell having a cross-sectional area of 1.35 cm$^2$ (a width of 50 mm and a height of 2.7 mm) and a length of 5 cm to be installed therein, and the permeability of the first electrode was measured. Water (20°C) was permeated through the permeation measurement cell at a permeation flux of 0.5 cm/sec, and a pressure difference (outlet pressure - inlet pressure) caused by the stacked first electrodes was measured, and the permeability was calculated. The permeability of the first electrode used in Example 1 was $3.5 \times 10^{-11}$ m$^2$.

A conductive sheet including carbon nanotubes was used as the second electrode. The conductive sheet was produced by the following method.

First carbon nanotubes having an average fiber diameter of 150 nm and an average fiber length of 15 $\mu$m and second carbon nanotubes having an average fiber diameter of 15 nm and an average fiber length of 3 $\mu$m were mixed together in pure water. The mixing ratio of the first carbon nanotubes was set to 90 parts by mass and the mixing ratio of the second carbon nanotubes was set to 10 parts by mass relative to 100 parts by mass of the total of the first carbon nanotubes and the second carbon nanotubes. A polyisothionaphthene sulfonic acid which was a water-soluble conductive polymer was added. The mixing ratio of the added water-soluble conductive polymer was set to 1 part by mass relative to 100 parts by mass of the total of the first carbon nanotubes and the second carbon nanotubes.

The obtained mixture was processed by a wet-type jet mill; and thereby, a dispersed solution of carbon nanotubes was obtained. 50 parts by mass of carbon fibers having an average fiber diameter of 7 $\mu$m and an average fiber length of 0.13 mm were added to the dispersed solution relative to 100 parts by mass of the total of the first carbon nanotubes, the second carbon nanotubes, and the carbon fibers. Thereafter, the mixture was stirred by a magnetic stirrer; and thereby, the carbon nanotubes and the like were dispersed. The dispersed solution was filtered through a filter paper, and the residue together with the filter paper were dehydrated, a dehydrated residue was compressed by a press machine, and dried; and thereby, the conductive sheet containing the carbon nanotubes was produced.

The permeability of the produced conductive sheet having the length L was evaluated, and the length L different from a length of an electrode (second electrode in Example 1) for actual use could be adopted because the pressure difference $\Delta$P and the length L were in a proportional relationship. 30 layers of the produced conductive sheets were stacked, and Ni mesh sheets having 60 meshes and made from a Ni wire of $\Phi$0.10 mm were disposed on both surfaces of the stacked conductive sheets, and the stacked conductive sheets were compressed so that the total thickness became 1 cm, and the stacked conductive sheets were installed in a permeation measurement cell having a cross-sectional area of 1.35 cm$^2$ (a width of 50 mm and a height of 2.7 mm) and a length of 1 cm, and the permeability of the compressed conductive sheets was measured. Water (20°C and viscosity = 1.002 mPa·sec) was permeated through the permeation measurement cell at a permeation flux of 0.5 cm/sec, and a pressure difference (outlet pressure - inlet pressure) caused by the stacked conductive sheets was measured, and the permeability was calculated. The permeability of the conductive sheet (second electrode used in Example 1) was $2.7 \times 10^{-13}$ m$^2$.

A carbon fiber (CF) paper (manufactured by SGL Ltd. Co. and GDL10AA) having porosity was prepared as the liquid outlet layer. 11 layers of CF papers of 50 mm $\times$ 50 mm were stacked and compressed in a stacking direction in a permeability measurement cell having a cross-sectional area of 1.35 cm$^2$ (a width of 50 mm and a height of 2.7 mm) and a length of 5 cm to be installed therein, and the permeability of the CF paper was measured. Water (20°C) was permeated through the permeation measurement cell at a permeation flux of 0.5 cm/sec, and a pressure difference (outlet pressure - inlet pressure) caused by the stacked CF papers was measured, and the permeability was calculated. The permeability of the liquid outlet layer used in Example 1 was $4.1 \times 10^{-11}$ m$^2$.

Nafion N212 (registered trademark and manufactured by DuPont Ltd. Co.) was used as the ion-exchange membrane 10. The thickness of the ion-exchange membrane 10 was approximately 50 $\mu$m.

A secondary redox flow battery of Example 1 was assembled by sequentially stacking the prepared members on top of each other. The secondary redox flow battery had a cell-stack structure where five layers of cells were stacked on top of each other. An aqueous solution of 4.5 mol/L $H_2SO_4$ having a concentration of tetravalent vanadium ions of 1.8 mol/L was used as an electrolyte for a positive electrode. An aqueous solution of 4.5 mol/L $H_2SO_4$ having a concentration of trivalent vanadium ions of 1.8 mol/L was used as an electrolyte for a negative electrode. The volume of each electrolyte was set to 200 mL.

The cell resistance of the obtained redox flow battery was measured. The cell resistance of the redox flow battery of Example 1 was 0.7$\Omega$·cm$^2$.

(Example 2)

A redox flow battery of Example 2 differed from that of Example 1 in that the arithmetic surface roughness of the first surface 22a of the internal wall 22 was set to 2 $\mu$m and the material of the first electrode 31 was changed to a carbon fiber sheet B (carbon fiber diameter of 1.5 $\mu$m). In Example 2, surface roughening was performed under the conditions where the amount of ejected particles and an ejection pressure were set to values less than those of Example 1. The arithmetic surface roughness (Ra) of the first surface 22a of the internal wall 22 was 1.3 times the fiber diameter of carbon fibers. Other configurations were set similar to those of Example 1. The cell resistance of the redox flow battery of Example 2 was 0.68 $\Omega$·cm$^2$.

(Example 3)

A redox flow battery of Example 3 differed from that of Example 1 in that the arithmetic surface roughness of the first surface 22a of the internal wall 22 was set to 3.5 $\mu$m and the material of the first electrode 31 was changed to a carbon fiber sheet C (carbon fiber diameter of 5 $\mu$m). In Example 3, surface roughening was performed under the conditions where the amount of ejected particles was set to a value greater than that of Example 2. Other configurations were set similar to those of Example 1. The arithmetic surface roughness (Ra) of the first surface 22a of the internal wall 22 was 0.7 times the fiber diameter of carbon fibers of the electrode. The cell resistance of the redox flow battery of Example 3 was 0.75 $\Omega$·cm$^2$.

(Comparative Example 1)

A redox flow battery of Comparative Example 1 differed from that of Example 1 in that the arithmetic surface roughness of the first surface 22a of the internal wall 22 was set to 500 $\mu$m. Surface roughening was performed using ceramic particles having a particle size greater than that of Example 1 under the conditions where the amount of ejected particles and an ejection pressure were set to values greater than those of Example 1. Other configurations were set similar to those of Example 1. The cell resistance of the redox flow battery of Comparative Example 1 was 1.5 $\Omega$·cm$^2$.

(Comparative Example 2)

A redox flow battery of Comparative Example 2 differed from that of Example 1 in that the arithmetic surface roughness of the first surface 22a of the internal wall 22 was set to 0.5 $\mu$m. Surface roughening was performed under the conditions where the amount of ejected particles and an ejection pressure were set to values less than those of Example 2. Other configurations were set similar to those of Example 1. The cell resistance of the redox flow battery of Comparative Example 1 was 1.2 $\Omega \cdot$cm$^2$.

Table 1

|  | Surface Roughness (Ra) of First Surface of Internal Wall $\mu$m | Carbone Fiber Diameter (r) of First Electrode $\mu$m | Ra/r | Cell Resistance $\Omega \cdot$cm$^2$ |
|---|---|---|---|---|
| Example 1 | 27 | 8 | 3.4 | 0.7 |
| Example 2 | 2 | 1.5 | 1.3 | 0.68 |
| Example 3 | 3.5 | 5 | 0.7 | 0.75 |
| Comparative Example 1 | 500 | 8 | 62.5 | 1.5 |
| Comparative Example 2 | 0.5 | 8 | 0.0625 | 1.2 |

As shown in Table 1, the cell resistances of Examples 1 to 3 were smaller than those of Comparative Examples 1 and 2. The reason is considered that in the case where the first surface of the internal wall had a certain level of surface roughness, a state of contact between the first surface of the internal wall and the first electrode in contact therewith became favorable.

Industrial Applicability

In the collector plate and the redox flow battery of the present invention, the contact area between the electrode and the collector plate is considered to be large, and thus the cell resistance can be decreased. Therefore, the present invention can be preferably applied to a redox flow battery of a high-capacity storage battery.

Explanation of Reference Signs

10:     ion-exchange membrane
20:     collector plate
20A:   recessed region
21:     peripheral edge wall
21a:   first surface of peripheral edge wall
21i:   opening portion
22:     internal wall
22a:   first surface of internal wall
23:     exhaust path
30:     electrode
31:     first electrode
32:     second electrode
33:     liquid outlet layer
40:     cell frame
100:   redox flow battery
CE:    single cell
K:     electrode compartment
C:     flow path
C1:    first flow path
C2:    second flow path

W:      width of internal wall

**Claims**

1.  A collector plate comprising:

    a plurality of flow paths through which an electrolyte flows and which are provided in at least one surface of the collector plate,
    wherein an arithmetic surface roughness (Ra) of a first surface, which is an exposed surface of a wall portion between the plurality of flow paths on the side of one surface, is greater than or equal to 1 $\mu$m and less than or equal to 300 $\mu$m.

2.  The collector plate according to claim 1,
    wherein a width of the wall portion is greater than or equal to 0.5 mm and less than or equal to 30 mm.

3.  The collector plate according to claim 1 or 2, further comprising:

    a peripheral edge wall that surrounds a predetermined region containing the flow paths,
    wherein protrusions and recessions are provided in a first surface which is an exposed surface of the peripheral edge wall on the side of one surface, and
    wherein the protrusions and recessions are formed in a direction intersecting an extension direction of the peripheral edge wall.

4.  The collector plate according to any one of claims 1 to 3, further comprising,

    a peripheral edge wall that surrounds a predetermined region containing the flow paths,
    wherein a surface roughness (Ra) of a first surface which is an exposed surface of the peripheral edge wall on the side of one surface, which is measured along a direction perpendicular to an extension direction of the peripheral edge wall, is greater than a surface roughness (Ra) of the first surface which is measured along the extension direction of the peripheral edge wall.

5.  A redox flow battery comprising:

    an ion-exchange membrane;
    the collector plate according to any one of claims 1 to 4; and
    electrodes disposed between the ion-exchange membrane and the current collector,
    wherein the collector plate is disposed in such a manner that the first surface faces the electrode.

6.  The redox flow battery according to claim 5,

    wherein the electrode contains carbon fibers, and
    wherein an arithmetic surface roughness (Ra) of the first surface, which is an exposed surface of the wall portion on the side of one surface, is greater than or equal to 1.0 time a fiber diameter of the carbon fibers, and less than or equal to 100 times the fiber diameter.

# FIG. 1

## FIG. 2

## FIG. 3

# FIG. 4

# FIG. 5

FIG. 6

## INTERNATIONAL SEARCH REPORT

International application No.

PCT/JP2017/043786

### A. CLASSIFICATION OF SUBJECT MATTER
Int.Cl. H01M8/026(2016.01)i, H01M8/10(2016.01)i, H01M8/18(2006.01)i

According to International Patent Classification (IPC) or to both national classification and IPC

### B. FIELDS SEARCHED

Minimum documentation searched (classification system followed by classification symbols)
Int.Cl. H01M8/026, H01M8/10, H01M8/18

Documentation searched other than minimum documentation to the extent that such documents are included in the fields searched

| | |
|---|---|
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)
Japio-GPG/FX & key word: redox flow, Surface roughness

### C. DOCUMENTS CONSIDERED TO BE RELEVANT

| Category* | Citation of document, with indication, where appropriate, of the relevant passages | Relevant to claim No. |
|---|---|---|
| X | WO 2014/109957 A1 (GRAFTECH INTERNATIONAL HOLDINGS INC.) 17 July | 1, 5 |
| Y | 2014, claims, paragraphs [0021], [0026] (Family: none) | 2 |
| A | | 3, 4, 6 |
| | | |
| Y | JP 2015-122231 A (SUMITOMO ELECTRIC INDUSTRIES, LTD.) 02 July | 1, 2, 5, 6 |
| A | 2015, claims, paragraphs [0058]-[0061], [0075], fig. 1, 2 (Family: none) | 3, 4 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 December 2017 (25.12.2017) | 16 January 2018 (16.01.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT

| | International application No. |
|---|---|
| | PCT/JP2017/043786 |

C (Continuation).     DOCUMENTS CONSIDERED TO BE RELEVANT

| Category* | Citation of document, with indication, where appropriate, of the relevant passages | Relevant to claim No. |
|---|---|---|
| Y | JP 11-297338 A (NISSHINBO INDUSTRIES, INC.) 29 October 1999, claims, paragraph [0006] & EP 949704 A1, claims, paragraph [0006] & US 6348279 B1 & CA 2268423 A1 | 1, 2, 5, 6 |
| Y | JP 2007-149467 A (MATSUSHITA ELECTRIC WORKS, LTD.) 14 June 2007, claims, paragraph [0016] (Family: none) | 1, 2, 5, 6 |
| Y | JP 2-148659 A (TOYOBO CO., LTD.) 07 June 1990, example 1 (Family: none) | 2 |
| Y | JP 2003-157885 A (SUMITOMO ELECTRIC INDUSTRIES, LTD.) 30 May 2003, paragraph [0034] (Family: none) | 2 |
| Y | JP 2002-246035 A (SUMITOMO ELECTRIC INDUSTRIES, LTD.) 30 August 2002, paragraph [0059] (Family: none) | 2 |
| P, X | CN 106450404 A (DALIAN RONGKE POWER CO. LTD.) 22 February 2017, example 3 (Family: none) | 1, 5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016236721 A
- JP 2015122231 A

- JP 2015505147 A